Europäisches Patentamt

European Patent Office

Office européen des brevets

(11) Publication number: **0 029 682**
**A1**

# EUROPEAN PATENT APPLICATION

(21) Application number: **80304034.4**

(22) Date of filing: **12.11.80**

(51) Int. Cl.³: **G 01 P 3/481**
**F 02 P 7/06**

(30) Priority: **21.11.79 GB 7940205**

(43) Date of publication of application:
**03.06.81 Bulletin 81/22**

(84) Designated Contracting States:
**BE DE FR GB IT NL**

(71) Applicant: **LUCAS INDUSTRIES LIMITED**
**Great King Street**
**Birmingham, B19 2XF(GB)**

(72) Inventor: **Jay, Michael Arthur**
**17 Colebrook Croft Shirley**
**Solihull West Midlands(GB)**

(74) Representative: **Carpenter, David et al,**
**MARKS & CLERK Alpha Tower ATV Centre**
**Birmingham B1 1TT(GB)**

(54) Transducer.

(57) A transducer sensor head wherein first and second cylindrical ferromagnetic cores 23, 24, each having an associated coil, are positioned spaced apart with their axes co-extensive, the cores being spaced apart by a distance approximately equal to their diameter and the coils being connected in series and being wound to induce cumulative magnetic fields.

Fig. I

EP 0 029 682 A1

Croydon Printing Company Ltd.

This invention relates to a sensor head for a transducer of the kind intended to produce an electrical signal at a predetermined point or points in each revolution of a rotating component, for example for producing a signal utilized in a six cylinder internal combustion engine spark ignition system or fuel injection system, at three equi-angularly spaced points in each revolution of the engine crank shaft.

A previously proposed transducer includes a sensor head which is fixed in use, and a rotating vane which rotates adjacent the sensor head. The sensor head includes a ferromagnetic core of cylindrical form encircled by a coil, and the coil/core combination is positioned with its axis parallel to the axis of rotation of the vane. The vane is in the form of a ferromagnetic disc and in the case of a transducer used in a six cylinder engine, the vane is rotatable with the crank shaft of the engine, and has three equi-angularly spaced peripheral slots each having a width equal to $60^o$ of rotation of the vane. It will be recognised that as the vane rotates relative to the sensor head alternately slots and solid parts of the vane pass adjacent the coil/core combination, passing through the magnetic field generated around the coil/core combination by passage of an electric current through the coil. The passage of the alternate slots and solid parts of the vane through the flow of magnetic flux produces a corresponding variation in the quality factor (Q) of the coil, and each variation in Q is sensed by an associated control circuit. It is usual for the coil to be part of an oscillator circuit, the oscillations of which are reduced in amplitude by the passage of a solid part of the vane adjacent the core. The control circuit produces an output signal each time a solid part of the vane passes the core. Thus in the six cylinder engine version three output signals will be produced for each revolution of the engine crank shaft, the output signals being spaced by a time interval equivalent to 120$^\circ$ of crank shaft rotation.

In such an arrangement it is known that if the coil/core combination is adequately to sense the rotation of the vane then the vane must be relatively close to the core. A very approximate guide to the positioning of the vane relative to the cylindrical core is that for adequate sensing the air gap between the vane and the core must not exceed the radius of the core. This rule is of course only an approximate guide, but is sufficient for an understanding of the present invention. As the expert reader will understand the true criteria is the flux density which in turn is determined by the ampere turns of the winding on the core and the magnetic nature of the core.

In the previously proposed arrangement the coil/ core combination is positioned to one side of the vane with its axis parallel to the axis of rotation of the vane. Owing to limitations imposed by the physical arrangement within which the transducer is to be mounted it has been found that a problem can arise in that the physical limitations imposed by the application preclude the use of a coil/core combination of sufficient diameter to accommodate the maximum air gap which can occur between the core and the vane. For example, the physical limitations dictate a maximum diameter of core, in a situation where the same physical limitations permit an air gap between the core and the vane which is so large that adequate sensing of rotation of the vane by the sensor head will not be achieved. It is an object of the present invention to provide a transducer sensor head wherein the aforementioned problem is minimized.

A transducer sensor head according to the
invention includes a first cylindrical, ferromagnetic
core having a first coil associated therewith, a second,
similar, cylindrical ferromagnetic core having a second
coil associated therewith, the first and second coils
being electrically inter-connected in series, and being
so wound on their respective cores that the magnetic
fields which they  induce are cumulative and means
mounting the first and second cores spaced apart, with
their axes co-extensive, the cores being spaced apart
by a distance of the order of the diameter of the cores.

The invention further resides in a transducer
including a sensor head as specified in the preceding
paragraph, and a rotatable vane, the vane being rotatable
about an axis parallel to the axis of the cores, and the
periphery of the vane extending between the cores.

One example of the invention is illustrated in the
accompanying drawings wherein:-

Figure 1 is a diagrammatic side elevational view
of a transducer;
Figure 2 is a view in the direction of arrow A

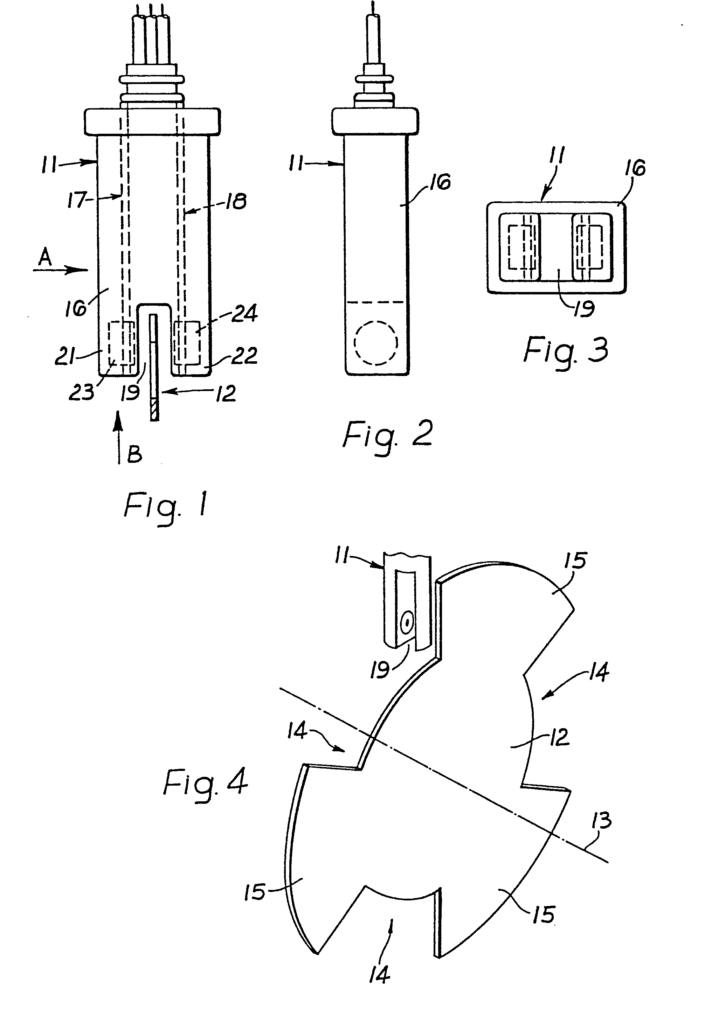

in Figure 1;
Figure 3 is a view in the direction of arrow B
in Figure 1; and
Figure 4 is a diagrammatic perspective view of the
transducer shown in Figure 1.

Referring to the drawings, the transducer, which
is intended for use on a six cylinder internal combustion engine, and which is required to produce an output signal at three equi-angularly spaced points in each
revolution of the engine crank shaft, comprises a sensor
head 11 and a vane 12. The vane 12 is in the form of a
disc of steel or other electrically conductive material
which is mounted on the crank shaft of the engine for
rotation therewith. The axis or rotation of the crank
shaft is illustrated in Figure 4 at 13. The disc
forming the vane 12 starts as a circular disc, but its
periphery is cut to form therein three equi-angularly
spaced slots 14 each of which occupies $60^{\circ}$ of the
circumference of the disc. Thus between the slots are
three $60^{\circ}$ sectors of the disc which will be called masks
15.

The sensor head 11 comprises a mouled synthetic
resin body 16 of rectangular cross-section. Housed within
the body 16 are first and second printed circuit boards
17, 18 which are positioned parallel to one another and
parallel to the length of the body 16. At one end the
body 16 is bifurcated by a slot 19 and printed circuit
board 17 extending into one limb 21 of the body on one
side of the slot 19 and the printed circuit board extending into the opposite limb 22 of the body 16.

Secured to the printed circuit board 17 within
the limb 21 is a cylindrical ferromagnetic core 23 of
circular cross-section having its axis at right-angles
to the length of the body 16. Similarly, secured to the
printed circuit board 18 within the limb 22 is a second
cylindrical ferromagnetic core 24 of circular cross-
section, the axes of the cores 23, 24 being co-extensive.
Each of the cores 23, 24 is encircled by a coil (not
shown) connections to the coils being made by way of the
printed circuits boards 17, 18. The two coils are
electrically interconnected in series and are so wound on their respective cores 23, 24 that the induced magnetic fields are cumulative, that is to say that if a north magnetic pole is induced on the face of the pole 23 which faces the vane 12, then simultaneously a south magnetic pole is induced in the face of the core 24 presented to the vane 12. In use, the sensor head 11 is secured to a wall of the internal combustion engine adjacent the crank shaft thereof, and the vane 12 carried by the crank shaft extends into the slot 19.

The intended operation of the transducer is that the first and second coils of the cores 23, 24 respectively are electrically connected in an oscillator circuit and the passage of a mask 15 adjacent the cores 23, 24 alters the quality factor (Q) of the coil/core combinations thus reducing the oscillation amplitude of the oscillator circuit. The reduction in oscillation amplitude of the oscillator circuit is sensed by a control circuit which produces an output signal. Thus each time a mask 15 passes between the cores 23, 24 an output signal is produced and therefore for each revolution of the crank shaft three output signals are produced the output signals being spaced apart in time by the equivalent of 120° of rotation of the crank shaft. It will be recognised of course that if desired the control circuit can be arranged to produce the output signal as a result of passage of each slot 14 between the cores 23, 24.

It is recognised that in transducers operating in this manner the proximity of the vane to a coil/core combination is critical, and as a general guide it is recognised that if the air gap between the core and the vane exceeds the radius of the core then the vane will have insufficient affect on the Q factor of the coil/ core combination to achieve adequate sensing. It will further be recognised that since the coils of the cores
23, 24 are electrically in series then their effect is
that which would be produced by a single larger coil/
core combination.  However, in a previously proposed
arrangement a single coil/core combination was utilized
on one side of a disc, and the diameter of the coil/core
combination was restricted by the location in which the
sensor head was required to be mounted.  However, while
the diameter of the coil/core combination was restricted
to a given maximum diameter, it could not be guaranteed
that the vane 12 would be mounted such that the appropriate
air gap between the vane 12 and the core would not be
exceeded.  For example, the maximum diameter of core which
could be introduced between the vane and the engine wall
was 8mm.  Thus using the "rule of thumb" guide given
above the maximum air gap between the vane and the core
should have been 4mm.  However, the engine manufacturer
could not guarantee the positioning of the vane relative
to the core to an accuracy greater than plus or minus 4mm,
and so in the worst case there was the possibility of an
air gap between the vane and the core of 8mm.  Clearly in
order to accommodate an 8mm air gap a 16mm diameter core
is required, and the physical limitations imposed by the
particular application did not permit the mounting of a
16mm diameter core on either side of the disc.

This problem was overcome by utilizing the sensor
head described above with reference to Figures 1 to 4.
Each of the cores 23, 24 is of 8mm diameter, and thus can
be accommodated alongside the vane 12.  Each core has an
effective range therefore of approximately 4mm and in
manufacturing the sensor head the gap between the axially
aligned cores 23, 24 is arranged to be substantially 8mm.
Thus the permitted latitude of mounting of the vane 12 is
accommodated since the vane 12 will lie at some point
within the 8mm wide slot 19, and the vane will always
be within 4mm of one or other of the cores 23, 24.  Thus

0029682

all of the predetermined requirements specified by the manufacturer are accommodated in that the cores 23, 24 do not exceed the maximum which can be accommodated in the predetermined location of the sensor head, the maximum tolerance range in the mounting of the vane 12 (8mm) is accommodated, and the vane must always be within the sensing range of one or other of the two cores so that the sensing head will sense the rotation of the vane 12 efficiently irrespective of the mounting of the vane within its predetermined tolerance range.

It will be recognised that the dimensions given above are by way of example only, and that the rule concerning the sensing range of a coil/core combination is an approximation chosen for the purposes of simplifying the explanation of the invention.

C L A I M S

1.     A transducer sensor head including a first cylindrical ferromagnetic core having a first coil associated therewith, characterized in that there is provided a second cylindrical ferromagnetic core 24 similar to said first core 23 and having a second coil associated therewith, said first and second coils being electrically interconnected in series and being so wound on their respective cores 23, 24 that the magnetic fields which they induce are cumulative, and means 16 mounting the first and second cores 23, 24 spaced apart with their axes co-extensive, the cores 23, 24 being spaced apart by a distance of the order of the diameter of the cores.

2.     A transducer characterized by comprising a sensor head as claimed in Claim 1 and a rotatable vane 12, the vane 12 being rotatable about an axis parallel to the axes of the cores 23, 24, and the periphery of the vane 12 extending between the cores 23, 24.

Fig. 1

Fig. 2

Fig. 3

Fig. 4

| | European Patent Office | EUROPEAN SEARCH REPORT | Application number EP 80 30 4034 |
| --- | --- | --- | --- |

## DOCUMENTS CONSIDERED TO BE RELEVANT

| Category | Citation of document with indication, where appropriate, of relevant passages | Relevant to claim |
| --- | --- | --- |
| X | US - A - 3 822 686 (GALLO)<br><br>* abstract; figures; column 1, line 63 to column 2, line 53 *<br><br>-- | 1, 2 |
| X | DE - A - 2 604 485 (KOCH)<br><br>* figures; claim; page 3, lines 18 to 31 *<br><br>-- | 1, 2 |
| P | DE - A - 1 539 256 (SCHERHAG)<br><br>* figures *<br><br>-- | 1, 2 |
| | FR - A - 2 244 980 (HONDA)<br><br>* figures; claims 12-14 *<br><br>-- | 1, 2 |
| | IBM TECHNICAL DISCLOSURE BULLETIN, vol. 5, no. 2, July 1962 NEW YORK (US) C.P. BARNARD: "Radio frequency oscillator circuit breaker" page 30<br><br>* the whole document *<br><br>------ | 1, 2 |

**CLASSIFICATION OF THE APPLICATION (Int. Cl.³)**

G 01 P 3/481
F 02 P 7/06

**TECHNICAL FIELDS SEARCHED (Int. Cl.³)**

G 01 P 3/48
      3/481
      3/488
G 01 D 5/20
F 02 P 7/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
| --- | --- | --- | --- |
| | The present search report has been drawn up for all claims | | |
| Place of search<br>The Hague | Date of completion of the search<br>26-02-1981 | Examiner<br>LLOYD | |

EPO Form 1503.1  06.78